(19) Europäisches Patentamt
European Patent Office
Office européen des brevets

(11) **EP 3 847 470 B1**

(12) **EUROPÄISCHE PATENTSCHRIFT**

(45) Veröffentlichungstag und Bekanntmachung des Hinweises auf die Patenterteilung:
**26.11.2025 Patentblatt 2025/48**

(21) Anmeldenummer: **19726684.4**

(22) Anmeldetag: **25.05.2019**

(51) Internationale Patentklassifikation (IPC):
*G01S 13/931* (2020.01)    *G01S 7/40* (2006.01)
*G01S 13/58* (2006.01)    *G01S 7/41* (2006.01)
*G01S 13/34* (2006.01)

(52) Gemeinsame Patentklassifikation (CPC):
**G01S 7/403; G01S 7/4026; G01S 7/4034;**
**G01S 7/415; G01S 13/343; G01S 13/589;**
**G01S 13/931;** G01S 7/4039; G01S 2013/932;
G01S 2013/93271

(86) Internationale Anmeldenummer:
**PCT/EP2019/063557**

(87) Internationale Veröffentlichungsnummer:
**WO 2020/048649 (12.03.2020 Gazette 2020/11)**

(54) **VERFAHREN ZUR ERKENNUNG VON WINKELMESSFEHLERN BEI EINEM RADARSENSOR**

METHOD FOR DETECTING ANGLE MEASURING ERRORS IN A RADAR SENSOR

PROCÉDÉ DE DÉTECTION D'ERREURS DE MESURES ANGULAIRES DANS UN CAPTEUR DE RADAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.09.2018 DE 102018214961**

(43) Veröffentlichungstag der Anmeldung:
**14.07.2021 Patentblatt 2021/28**

(73) Patentinhaber: **Robert Bosch GmbH**
**70442 Stuttgart (DE)**

(72) Erfinder: **BROSCHE, Thomas**
**71229 Leonberg (DE)**

(56) Entgegenhaltungen:
**EP-A1- 3 279 683         DE-A1- 102014 223 461**
**DE-A1- 102015 116 441**

**Beschreibung**

Die Erfindung betrifft ein Verfahren zur Erkennung von Winkelmessfehlern bei einem winkelauflösenden Radarsensor für Kraftfahrzeuge, bei dem für stationäre Radarziele jeweils die Radialgeschwindigkeit und mindestens ein Ortungswinkel gemessen wird und anhand des gemessenen Ortungswinkels ein erwarteter Wert für die Radialgeschwindigkeit berechnet und mit dem gemessenen Wert verglichen wird, wobei Messungen der Radialgeschwindigkeiten und der Ortungswinkel für ein oder mehrere stationäre Ziele vorgenommen werden und für jedes dieser Ziele ein Einzel-Indikatorwert berechnet wird, der die Abweichung der gemessenen von der erwarteten Radialgeschwindigkeit angibt.

Stand der Technik

Zur Messung von Abstand, relativer radialer Geschwindigkeit und Winkel von physikalischen Objekten werden in Kraftfahrzeugen Radarsensoren eingesetzt. Ziel ist die Unterstützung von Komfort- und Sicherheitsfunktionen, ggf. in Verbindung mit weiterer geeigneter Sensorik (z.B. Ultraschall, Video oder Lidar). Physikalische Objekte können bei einer Radarmessung ein oder mehrere Zielreflexe an verschiedenen Positionen aufweisen, insbesondere bei ausgedehnten Objekten bzw. guter Trennfähigkeit der Radarsensoren.

Heutige Radarsensoren sind meist FMCW (Frequency Modulated Continuous Wave)-Radarsensoren mit Fast-Chirp-Modulation, d.h. schnellen breitbandigen Rampen mit Rampendauern von $10\mu s$ bis zu einigen $10\mu s$, d.h. einer hohen Steilheit der FMCW-Modulationsrampen, wodurch der Doppler-Anteil innerhalb einer Rampe näherungsweise vernachlässigt werden kann. Durch Auswertung der Einzelrampen erhält man somit im Wesentlichen die Abstandsinformation. Ein Messzyklus beinhaltet zudem meist eine Vielzahl von (z.B. 256) Rampen mit z.B. 512 Abtastwerten pro Rampe. Die Auswertung der zeitlichen Veränderung der Phasenlage an korrespondierenden Abtastpunkten von Rampe zu Rampe ergibt dann eine zusätzliche unabhängige Information über die Doppler-Frequenz (Geschwindigkeit) von Zielen bzw. Zielreflexen und erfolgt in der Regel über eine zwei dimensionale Fourier-Transformation.

Für die Winkelschätzung sind zunehmend MIMO-Antennensysteme (Multiple Input Multiple Output) im Einsatz, die mehrere Sende- und Empfangskanäle aufweisen. Die Sendekanäle werden in der Regel durch Time-Division-Multiplex-Verfahren (TDM) getrennt. Möglich sind aber auch andere Verfahren, wie Frequency-, Code- Division-Multiplex (FDM, CDM) oder OFDM basierte Radarsysteme.

Die Winkelauswertung basiert üblicherweise auf der Auswertung der Laufzeit- bzw. Phasenunterschiede zwischen verschiedenen Empfangskanälen, bzw. bei MIMO zwischen verschiedenen Sende-Empfangskanal-Kombinationen. Die Sende-Empfangskanal-Kombinationen können in ihrer Wirkung auch als äquivalentes virtuelles Array mit nur einem Sendekanal bzw. als virtuelle Empfangskanäle betrachtet werden.

Aus DE 10 2014 223 461 A1 ist ein Verfahren der eingangs genannten Art bekannt, mit dem eine Dejustage eines Radarsensors erkannt und die entsprechenden Dejustagewinkel geschätzt und kompensiert werden können. Die Dejustagewinkel sind hier die Fehlerwinkel in Azimut und Elevation, die für alle zu schätzenden Winkel gleich sind. Ein winkelabhängiger Winkelfehler wird nicht betrachtet.

Bei der Winkelschätzung oder Winkelmessung können jedoch auch sogenannte distortive Fehler auftreten, die z.B. durch Brechung der Radarwellen an unvorhergesehenen Störquellen verursacht werden, z.B. an einem ein Belag (Vereisung, Schnee, usw.) auf dem Radarsensor bzw. Radom oder bei indirektem Verbau des Radarsensors, z.B. hinter einer nicht geeigneten Stoßstange (z.B. nach Austausch der Stoßstange nach Austausch nach einem Parkrempler, Neulackierungen etc.). Bei solchen distortiven Winkelmessfehlern ist die Abweichung zwischen dem wahren und dem gemessenen Ortungswinkel ihrerseits winkelabhängig.

Ein Verfahren nach dem Oberbegriff des Anspruchs 1 ist aus DE 10 2015 116 441 A1 bekannt.

Offenbarung der Erfindung

Aufgabe der Erfindung ist es, ein Verfahren anzugeben, mit dem das Vorliegen distortiver Winkelmessfehler erkannt werden kann.

Diese Aufgabe wird erfindungsgemäß dadurch gelöst, dass die erhaltenen Einzel-Indikatorwerte einer winkelabhängigen Skalierung zum näherungsweisen Ausgleich der Winkelabhängigkeit der Empfindlichkeit der Einzel-Indikatorwerte für distortive Winkelfehler unterzogen werden, und aus den skalierten Einzel-Indikatorwerten ein Indikator für das Vorhandensein von Winkelmessfehlern berechnet wird.

Die Empfindlichkeit der Einzel-Indikatorwerte ist - unter Vernachlässigung von Nicken, Wanken und Gieren des Fahrzeugs - in Hauptstrahlrichtung (optische Achse) des Radars 0 und nimmt bei größeren Winkelablagen zu.

Die Winkelabhängigkeit der Empfindlichkeit der Einzel-Indikatorwerte für distortive Winkelfehler lässt sich berechnen und zumindest näherungsweise durch eine winkelabhängige Skalierung kompensieren, so dass man durch Mitteilung oder Summation über die Gesamtheit der betrachteten Radarziele einen Gesamt-Indikator erhält, der von der mehr oder weniger zufälligen Winkelverteilung der betrachteten Radarziele weitgehend unabhängig ist und das Vorhandensein distortiver Winkelfehler sowie deren Ausmaß anzeigt. Insbesondere können distortive Winkelfehler auf diese Weise auch dann erkannt werden, wenn kein Dejustagefehler vorliegt und somit für die über alle Ziele gemittelte Winkelabweichung ein Wert in der Nähe von null zu erwarten wäre.

Anhand des so erhaltenen Indikators kann die Genauigkeit und Verlässlichkeit der erhaltenen Winkelmessergebnisse abgeschätzt und bei den auf diesen Messergebnissen beruhenden Assistenzfunktionen angemessen berücksichtigt werden.

Vorteilhafte Ausgestaltungen und Weiterbildungen der Erfindung ergeben sich aus den Unteransprüchen.

In einer Ausführungsform erfolgt die winkelabhängige Skalierung der Parameter in einem zweidimensionalen Winkelraum, beispielsweise im Azimut und in Elevation.

Wahlweise können die Messergebnisse auch im Hinblick auf etwa vorhandene Dejustagefehler ausgewertet werden, beispielsweise nach dem in DE 10 2014 283 461 A1 beschriebenen Verfahren. Wenn dann die Dejustagefehler bekannt sind, können sie bei der Berechnung der erwarteten Radialgeschwindigkeiten berücksichtigt werden, so dass die Genauigkeit bei der Erkennung von distortiven Fehlern verbessert wird.

Bei einem FMCW-Radar, bei dem die Frequenz des gesendeten Radarsignals in aufeinanderfolgenden Messintervallen rampenförmig moduliert wird, ist es zweckmäßig, die Bestimmung der Einzel-Indikatorwerte auf der Basis von Messwerten vorzunehmen, die für die verschiedenen Radarziele innerhalb desselben Messintervalls erhalten wurden. Es ist jedoch auch möglich, die Einzel- und/oder Gesamt-Indikatorwerte einer zeitlichen Filterung zu unterziehen, beispielsweise mittels IIR-Filter, FIR-Filter; Kalman-Filter, Quantil und dergleichen, so dass die aktuellen Indikatorwerte mit entsprechenden Werten aus vorangegangenen Messintervallen verknüpft werden und damit zeitliche Verläufe besser erkannt werden können und die Genauigkeit weiter gesteigert werden kann.

Ebenso ist es möglich, mit Hilfe bekannter Tracking-Prozeduren die Relativbewegungen der betrachteten Radarziele über mehrere Messperioden hinweg zu verfolgen und mit der Eigenbewegung des Fahrzeugs zu vergleichen. Auf diese Weise ist es oft möglich, die Anteile der Abweichungen zwischen gemessener und erwarteter Radialgeschwindigkeit, die einerseits auf distortive Winkelfehler im Azimut und andererseits auf distortive Winkelfehler in Elevation zurückgehen, voneinander zu trennen, so dass auch eine quantitative Bestimmung und Kompensation der distortiven Winkelfehler ermöglicht wird. Dies ist beispielsweise möglich, indem man eine Synthetic-Aperture-Radar (SAR) Auswertung vornimmt - die auf dem zeitlichen Verlauf der Doppler-Frequenz basiert - und die Zielpositionen im SAR-Ergebnis mit den anhand der Radarmessung (Zielentfernung, Azimut- und Elevationswinkel) ermittelten Zielpositionen vergleicht.

Im folgenden werden Ausführungsbeispiele anhand der Zeichnung näher erläutert.

Es zeigen:

Fig. 1 eine Skizze zur Illustration distortiver Winkelfehler an einem Radarsensor;

Fig. 2 eine Skizze zur Illustration eines Dejustagefehlers;

Fign. 3 und 4 Skizzen zur Illustration der Abhängigkeit der Radialgeschwindigkeit eines Radarziels vom Ortungswinkel;

Fig. 5 ein Diagramm zur Illustration von Winkelbeziehungen für ein Radarziel in einem Kugelkoordinatensystem;

Fig. 6 ein Diagramm zur Illustration von Winkelbeziehungen für ein Radarziel in einem Kegelkoordinatensystem;

Fig. 7 ein Flussdiagramm zur Illustration wesentlicher Schritte eines Verfahrens gemäß der Erfindung; und

Fig. 8 ein Diagramm zur Illustration einer Skalierungs- und Limitierungsfunktion.

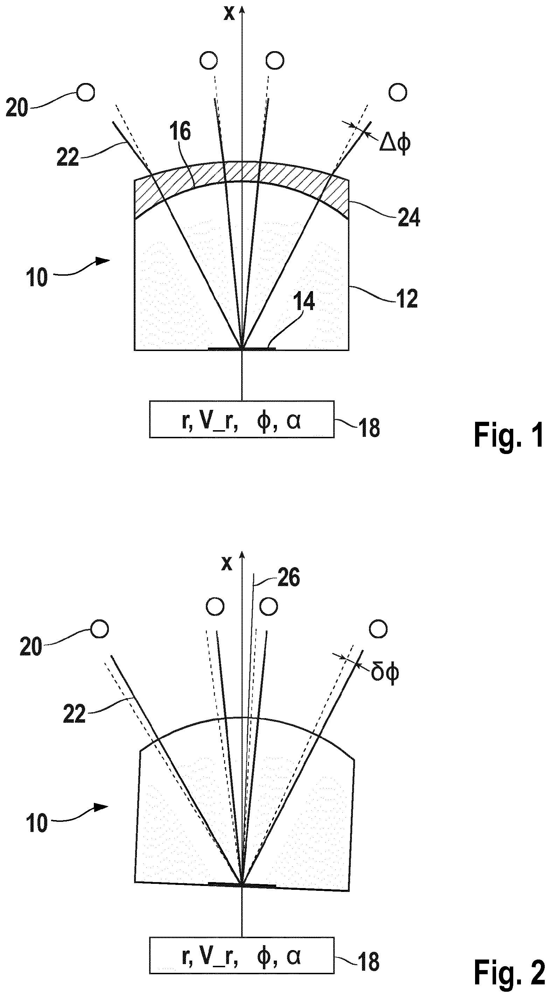

In Fig. 1 ist schematisch ein horizontaler Schnitt durch einen Radarsensor 10 mit einem Gehäuse 12 gezeigt das ein MIMO-Antennenarray 14 aufnimmt und auf einer Sende- und Empfangsseite durch ein Radom 16 begrenzt wird. An das Antennenarray 14 ist eine Steuer- und Auswerteeinrichtung 18 angeschlossen, die dazu dient, die Funktionen des Radarsensors zu steuern und anhand der empfangenen Radarechos die Abstände r, Relativgeschwindigkeiten $V\_r$ (Radialgeschwindigkeiten), Azimutwinkel $\varphi$, und Elevationswinkel $\alpha$ (zusammenfassend als Ortungswinkel bezeichnet) von im Ortungsbereich liegenden Radarzielen 20 zu bestimmen. Schematisch sind die an vier Radarzielen 20 reflektierten und wieder vom Antennenarray 14 empfangenen Radarstrahlen 22 eingezeichnet.

Als Beispiel wird angenommen, dass sich auf dem Radom 16 ein Belag 24 befindet, beispielsweise eine Eiskruste, an deren Oberfläche die Radarstrahlen 22 gebrochen werden, so dass bei der Winkelmessung (hier im Azimut) ein distortiver Winkelmessfehler $\Delta\varphi$ auftritt. Man erkennt, dass die Radarstrahlen 22 durch den Belag 24 unterschiedlich stark und in unterschiedliche Richtungen gebrochen werden, so dass Betrag und Vorzeichen der distortiven Winkelmessfehler $\Delta\varphi$ von der Lage des jeweiligen Radarziels 20 relativ zum Radarsensor 10 abhängig sind.

Der Radarsensor 10 ist in der Frontpartie eines Kraftfahrzeugs eingebaut und dient insbesondere dazu, vorausfahrende Fahrzeuge sowie sonstige Hindernisse im Vorfeld des Fahrzeugs zu orten. Dabei ist der Radarsensor im Normalfall so justiert, dass seine optische Achse mit der Achse x übereinstimmt, die die Vorwärtsrichtung oder Fahrtrichtung des Kraftfahrzeugs angibt.

Zum Vergleich zeigt Fig. 2 eine Situation, in der kein distortiver Winkelfehler auftritt, der Radarsensor 10 aber nicht korrekt justiert ist, so dass seine optische Achse 26 im Azimut von der x-Achse abweicht. Die Folge ist, dass die für die verschiedenen Radarziele 20 gemessenen Azimutwinkel $\varphi$ einen Dejustagefehler $\delta\varphi$ aufweisen. Anders als der distortive Winkelmessfehler $\Delta\varphi$ hat der Dejustagefehler $\delta\varphi$ jedoch für alle Ziele 20 das gleiche Vorzeichen und den gleichen Betrag.

Im folgenden soll ein Verfahren beschrieben werden, mit dem das Vorhandensein solcher Winkelmessfehler, insbesondere der distortiven Winkelmessfehler gemäß Fig. 1 zuverlässig erkannt werden kann.

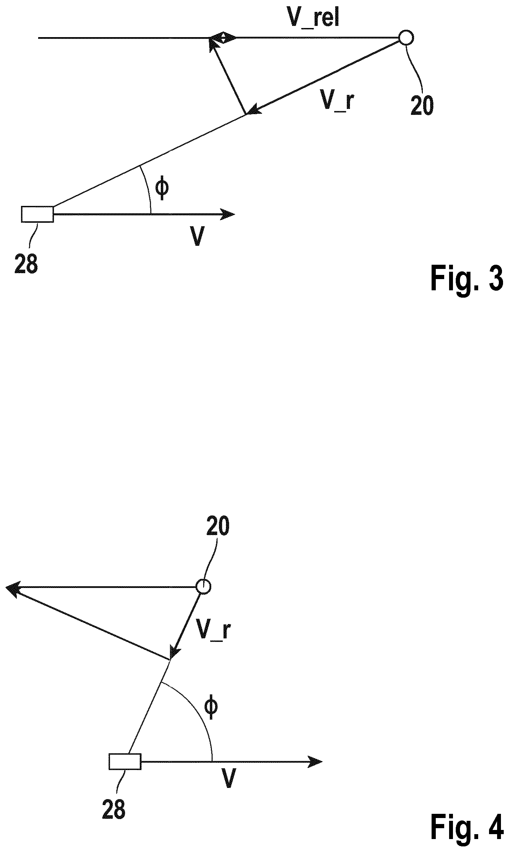

In Fig. 3 ist in einer Grundrissskizze ein Kraftfahrzeug 28 dargestellt, das sich an einem stationären Radarziel 20, beispielsweise einem am Straßenrand stehenden Verkehrsschild, vorbeibewegt. Die Eigengeschwindigkeit V des Kraftfahrzeugs ist als Vektor eingezeichnet. Ein Vektor **V_rel** = **-V** gibt die Relativgeschwindigkeit des Radarziels 20 relativ zum Kraftfahrzeug 28 an. Im Folgenden wird zur Vereinfachung davon ausgegangen, dass die Bewegungsrichtung der Antenne des im Kraftfahrzeug eingebauten Radarsensors mit der Bewegungsrichtung der Fahrzeug-Hinterachse übereinstimmt. Im Allgemeinen kann die Richtung der tatsächlichen Eigengeschwindigkeit der Antenne 14 jedoch, abhängig vom Einbauort des Radars 10 im Fahrzeug, aufgrund von Nick-, Wank- und Drehbewegungen um die Fahrzeug-Hochachse (Gieren), von der x-Achse des Koordinatensystems abweichen. Dies muss entsprechend durch Verwendung der tatsächlichen Geschwindigkeit V der Antenne an deren Einbauort und entsprechend korrigierten Winkelmesswerten (($\varphi,\alpha$) bzw. ($\alpha,\beta$) sind die Winkel zwischen der tatsächlichen Bewegungsrichtung des Antennenarrays und dem jeweiligen Ziel) berücksichtigt werden oder die Auswertung wird auf Fahrsituationen mit vernachlässigbar geringen Nick-, Wank- und Gierbewegungen beschränkt.

Das Radarziel 20 wird von dem in der Frontpartie des Kraftfahrzeugs 28 eingebauten (in Fig. 3 nicht gezeigten) Radarsensor 10 geortet. In der in Fig. 3 gezeigten Situation wird für dieses Ziel ein relativ kleiner Ortungswinkel (Azimutwinkel) $\varphi$ gemessen. Der Vektor V_rel lässt sich zerlegen in eine Radialkomponente längs des Sehstrahls zwischen dem Radarsensor und dem Radarziel und eine dazu rechtwinklige Transversalkomponente. Der Betrag der Radialkomponente ist die Radialgeschwindigkeit $V_r = \cos(\varphi) * V$, wobei V der Betrag der Eigengeschwindigkeit des Kraftfahrzeugs bzw. der Antenne über Grund und zugleich der Betrag der Relativgeschwindigkeit **V_rel** ist.

Fig. 4 zeigt die Situation zu einem späteren Zeitpunkt, wenn der Azimutwinkel $\varphi$ zugenommen und sich dementsprechend die Radialgeschwindigkeit $V_r$ im Verhältnis zur Eigengeschwindigkeit V verringert hat.

Wenn bekannt ist, dass das Radarziel 20 ein stationäres Ziel ist, und wenn außerdem die Eigengeschwindigkeit V des Fahrzeugs bzw. insbesondere des Antennenarrays am jeweiligen Einbauort bekannt ist, beispielsweise aufgrund direkter Messung mittels Raddrehzahlsensoren am Fahrzeug, der Gierrate etc., so kann $V_r$ gemäß der oben angegebenen Formel $V_r = \cos(\varphi) * V$ berechnet werden. Andererseits kann $V_r$ aufgrund des Dopplereffektes auch direkt mit Hilfe des Radarsensors 10 gemessen werden. Ein Vergleich des gemessenen mit dem berechneten Wert ermöglicht eine Überprüfung, ob die Messung des Azimutwinkels $\varphi$ korrekt war.

In Figuren 3 und 4 werden nur zwei Raumdimensionen in Betracht gezogen. Bei Betrachtung aller drei Raumdimensionen ist die Radialgeschwindigkeit $V_r$ auch von dem Elevationswinkel $\alpha$ des Radarziels 20 abhängig, nämlich gemäß der Formel:

$$V_r = \cos(\alpha) * \cos(\varphi) * V. \qquad\qquad (1)$$

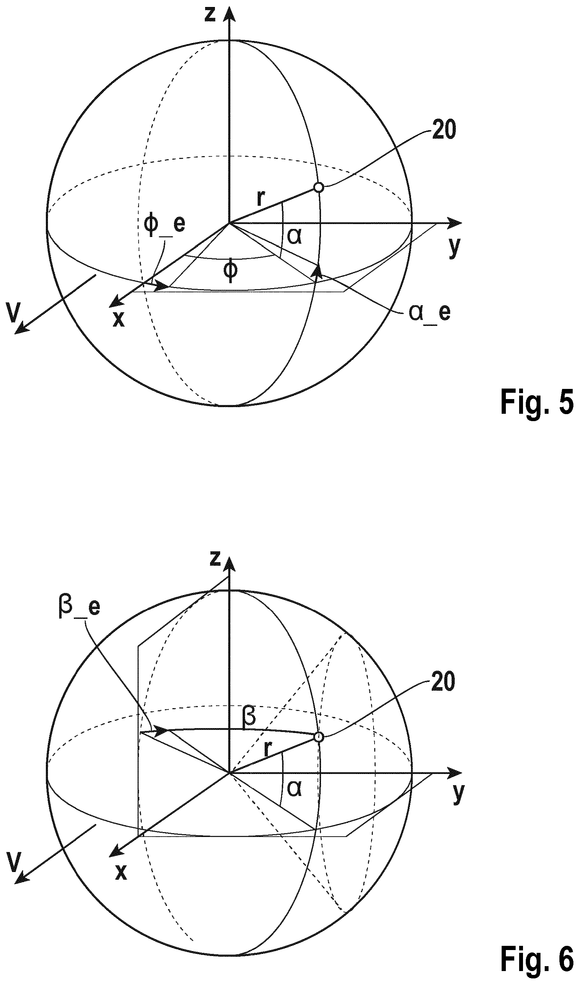

Fig. 5 zeigt das Radarziel 20 in einem dreidimensionalen kartesischen Koordinatensystem mit den Achsen x, y, und z. In Kugelkoordinaten ist die Position des Radarziels 20 gegeben durch den Radius r, den Azimutwinkel $\varphi$ und den Elevationswinkel $\alpha$. Die vektorielle Eigengeschwindigkeit V des Kraftfahrzeugs bzw. Antennenarrays ist in Fig. 5 und Fig. 6 zur Vereinfachung parallel zur x-Achse dargestellt. Eingezeichnet sind außerdem ein möglicher Winkelmessfehler $\varphi_e$ im Azimut und ein möglicher Winkelmessfehler $\alpha_e$ in Elevation.

Für die Umrechnung von Kugelkoordinaten in kartesische Koordinaten gelten die Beziehungen:

$$x = r * \cos(\varphi) * \cos(\alpha)$$

$$y = r * \sin(\varphi) * \cos(\alpha)$$

$$z = r * \sin(\alpha)$$

Anstelle der Kugelkoordinaten gemäß Fig. 5 können wahlweise auch Kegelkoordinaten (r, β, α) verwendet werden, wie in Fig. 6 gezeigt ist. Der Elevationswinkel α hat in Kegelkoordinaten die gleiche Bedeutung wie in Kugelkoordinaten. Er gibt den Winkel zwischen dem Ortsvektor des Radarziels 20 und der x-y-Ebene an. Der Azimutwinkel φ ist jedoch in Kegelkoordinaten ersetzt durch den Winkel β, der den Winkel zwischen dem Ortsvektor des Radarziels und der x-z-Ebene angibt. Für die Umrechnung in kartesische Koordinaten gilt somit:

$$x = r * ( \cos^2(\alpha) - \sin^2(\beta) )^{1/2}$$

$$y = r * \sin(\beta)$$

$$z = r * \sin(\alpha)$$

Ein Beispiel für einen möglichen Winkelmessfehler β_e ist ebenfalls eingezeichnet.

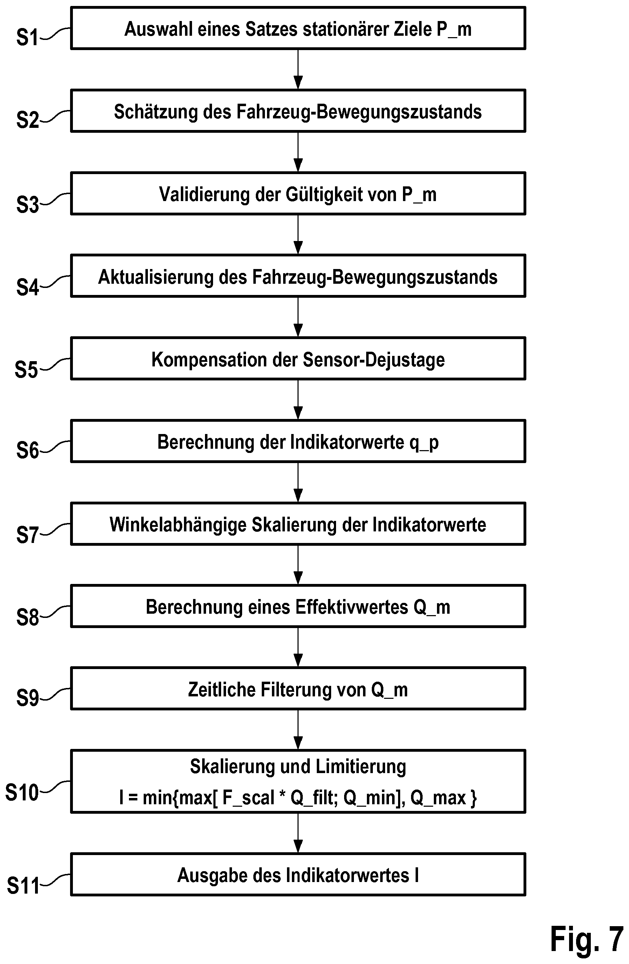

Bei den Winkelmessfehlern φ_e, α_e, β_e kann es sich im Prinzip um Dejustagefehler und/oder distortive Fehler handeln. Verfahren zur Erkennung von Dejustagefehlern sind als solche bekannt. Um auch distortive Fehler zu erkennen, kann beispielsweise das in Fig. 7 als Fußdiagramm dargestellte Verfahren ausgeführt werden.

Die Menge der in einem gegebenen Messzyklus georteten stationären Ziele sei mit R_m bezeichnet (m ist ein Index, der den Messzyklus kennzeichnet). Kriterien für die Unterscheidung zwischen stationären und beweglichen Zielen sind bekannt und umfassen insbesondere den Vergleich der gemessenen Relativgeschwindigkeit des Ziels mit der Eigengeschwindigkeit des Fahrzeugs. Aus der Menge R_m wird in Schritt S1 eine Teilmenge P_m ausgewählt, die für die Prüfung auf distortive Messfehler benutzt werden soll. Die Anzahl N_m der ausgewählten Ziele sollte so groß sein, dass ein gewisser Ausgleich statistischer Fluktuationen erreicht wird. Außerdem sollten die ausgewählten Ziele möglichst gleichmäßig über einen möglichst großen Raumwinkel verteilt sein.

In Schritt S2 wird dann der Bewegungszustand des eigenen Kraftfahrzeugs 28 geschätzt, beispielsweise aufgrund der Signale von Raddrehzahlsensoren. In dem Koordinatensystem nach Fig. 5 oder Fig. 6 erhält man so einen Schätzwert für den Vektor **V**, der die Eigenbewegung des Fahrzeugs und somit der im Fahrzeug eingebauten Antenne des Radarsensors angibt. Das Ergebnis der Schätzung Schritt S2 kann zugleich die Grundlage für die Identifizierung von stationären Zielen in Schritt S1 des nächsten Messzyklus bilden.

Vorzugsweise wird in einem weiteren Schritt S3 die Gültigkeit der in Schritt S1 ausgewählten Ziele noch einmal validiert. Insbesondere unter Berücksichtigung der Eigenbewegung des Fahrzeugs und insbesondere der Antenne, die in Schritt S2 festgestellt wurde. Kriterien dabei sind zum Beispiel eine minimale Eigengeschwindigkeit des Fahrzeugs bzw. des Radarsensors über Grund, die Beschleunigung und Gierrate des eigenen Fahrzeugs, die Anzahl der Elemente (Ziele) in P_m und die Streuung der Winkelmessdaten.

In einem weiteren wahlfreien Schritt S4 werden die Daten, die die Eigenbewegung des Fahrzeugs angeben, anhand der in dem aktuellen und ggf. vorangegangenen Messzyklen erhaltenen Radardaten verifiziert und gegebenenfalls aktualisiert.

In dem hier betrachteten Beispiel soll außerdem angenommen werden, dass unabhängig von der Prüfung auf distortive Winkelfehler auch eine Prüfung auf Dejustagefehler stattfindet, gegebenenfalls auf der Basis Messdaten für die in Schritt S1 ausgewählten Ziele.

In Schritt S5 werden dann die Messdaten für die Ortungswinkel (z.B. φ und α) im Hinblick auf die erkannte Sensor-Dejustage korrigiert, so dass die nachfolgende Überprüfung auf distortive Fehler auf der Basis genauerer Winkelmessdaten erfolgen kann.

In Schritt S6 wird dann für jedes einzelne Ziel in der Menge P_m (die Ziele werden anhand eines Index p identifiziert) ein Indikatorwert q_p berechnet, der ein Maß für die Abweichung der berechneten Radialgeschwindigkeit V_r von der tatsächlich aufgrund des Dopplereffektes gemessenen Radialgeschwindigkeit darstellt. Ausgangspunkt ist dabei die Gleichung (1). Allerdings ist es zweckmäßig, zwischen Annäherung und Entfernung des Radarziels zu unterscheiden, indem man V_r negative Werte annehmen lässt, wenn sich das Ziel nähert. In Kugelkoordinaten gilt dann:

$$-V\_r / V = \cos(\alpha) * \cos(\varphi) = \cos(\underline{\alpha} - \alpha\_e) * \cos(\varphi - \varphi\_e)\,(2)$$

wobei $\underline{\alpha}$ und $\underline{\varphi}$ die möglicherweise fehlerbehafteten gemessenen Werte sind und α_e und φ_e die Winkelmessfehler sind.

Analog gilt in Kegelkoordinaten:

$$-V\_r / V = (1 - \sin^2(\beta) - \sin^2(\alpha))^{1/2} = (\cos^2(\beta - \beta\_e) - \sin^2(\alpha - \alpha\_e))^{1/2} \quad (3)$$

Wenn $\alpha\_p$ und $\varphi\_p$ die gemessenen Ortungswinkel für das Ziel mit dem Index p sind und $V\_r\_p$ die gemessene Radialgeschwindigkeit für dieses Ziel ist, so ist ein geeigneter Indikatorwert $q\_p$ beispielsweise gegeben durch:

$$q\_p = (-V\_r\_p / V) - \cos(\alpha\_p) * \cos(\varphi\_p) \quad (4)$$

oder in Kegelkoordinaten:

$$q\_p = (-V\_R\_P / V) - ( \cos^2(\alpha\_p) - \sin^2(\beta\_p) )^{1/2}. \quad (5)$$

Es sind jedoch auch abweichende Definitionen für die Indikatorwerte möglich, beispielsweise:

$$q\_p = (-V\_r\_p / V)^2 - \cos^2(\alpha\_p) * \cos^2(\varphi\_p) \quad (6)$$

bzw.

$$q\_p = (-V\_r\_p / V)^2 - \cos^2(\alpha\_p) + \sin^2(\beta\_p) \quad (7)$$

Da die distortiven Winkelmessfehler winkelabhängig sind, wie anhand von Fig. 1 erläutert wurde, werden grundsätzlich auch die in Schritt S6 erhaltenen Indikatorwerte winkelabhängig sein, d.h., man erhält im Prinzip für jedes Ziel in $P\_m$ einen anderen Indikatorwert. Generell wird daher auch die Summe oder der Mittelwert der Indikatorwerte von der Winkelverteilung der Ziele abhängig sein. Dabei können die Indikatorwerte auch unterschiedliche Vorzeichen annehmen, und je nach Winkelverteilung der Ziele kann unter Umständen der Mittelwert der Indikatorwerte nahe bei null liegen und eine korrekte Messung vortäuschen, obwohl in Wahrheit ein distortiver Messfehler vorhanden ist.

Damit man dennoch einen aussagekräftigen Indikator für das Vorhandensein von distortiven Fehlern erhält, wird in Schritt S7 eine winkelabhängigen Skalierung der Indikatorwerte vorgenommen. Dazu wird, (im Fall von Kugel-koordinaten) eine Skalierungsfunktion $F(\alpha, \varphi)$ oder $F(\alpha,\beta)$ im Fall von Kegelkoordinaten definiert, die die Winkelabhängigkeit der distortiven Winkelfehler zumindest näherungsweise wiedergibt. Die Skalierungsfunktion kann z.B. wiederum eine Funktion des Gradienten $G(\alpha, \varphi) = -\sin(\alpha + \varphi)$ sein:

$$F(\alpha, \varphi) = f[G(\alpha, \varphi)] = f[\sin(\alpha + \varphi)] \quad (8)$$

Im Fall von Kegelkoordinaten wird eine Skalierungsfunktion $F(\alpha, \beta)$ gebildet, die beispielsweise eine Funktion $F(\alpha,\beta) = f[G(\alpha,\beta)]$ des Gradienten $G(\alpha,\beta)$ sein kann:

$$G(\alpha,\beta) = -[\sin(2\alpha) + \sin(2\beta)] * (2*[\cos(2\alpha) + \cos(2\beta)])^{-1/2} \quad (9)$$

Aus den Indikatorwerten $q\_p$ für die einzelnen Ziele wird dann ein weitgehend winkelunabhängiger Effektivwert $Q\_m$ gebildet, beispielsweise gemäß folgender Formel:

$$Q\_m = ( \textstyle\sum_p | q\_p * F(\alpha, \varphi) |^2) / N\_m ) )^{1/2} \quad (10)$$

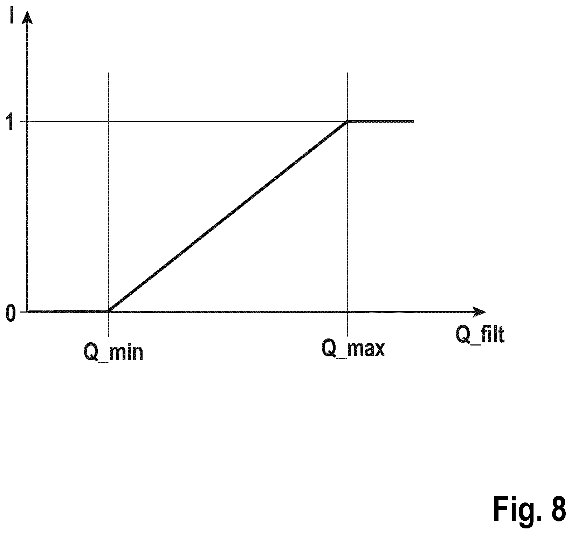

wobei das Summenzeichen eine Summation über alle Ziele in $P\_m$ bedeutet. In einem wahlfreien Schritt S9 werden dann die in aufeinanderfolgenden Messzyklen jeweils in Schritt S8 erhaltenen Effektivwerte einer zeitlichen Filterung unterzogen, um eine höhere Stabilität gegenüber statistischen Fluktuationen zu erreichen. Als Ergebnis der Filterung erhält man einen gefilterten Effektivwert $Q\_filt$. Dieser gefilterte Wert wird schließlich in Schritt S10 mit einem Skalenfaktor $F\_scal$ skaliert und mit oberen und unteren Grenzwerten $Q\_min$ und Q-max limitiert, so dass man letztlich einen Indikatorwert I erhält, der gemäß der in Fig. 8 gezeigten Funktion linear zwischen 0 und 1 variiert. Dieser Indikatorwert I wird dann in Schritt S10 an andere Module eines Fahrerassistenzsystems ausgegeben und erlaubt in diesen Modulen eine Bewertung der Genauigkeit und Verlässlichkeit der Ergebnisse der Winkelmessungen.

Die zur Bildung des Indikatorwertes I benutzte Information ist unabhängig von der in den Empfangskanälen des Antennenarrays 14 erhaltenen Phaseninformation und bildet ein Maß, das die Winkelfehler charakterisiert und von der klassischen Winkelschätzung unabhängig ist. Insbesondere können Winkelfehler oder eine Winkelblindheit des Radarsensors auch dann erkannt werden, wenn die Güte der Winkelschätzung so hoch ist, dass man anhand der Güte nicht auf einen Fehler schließen würde.

Unter der Annahme, dass der Elevationswinkel $\alpha$ fehlerfrei ist, lässt sich aus Gleichung (2) oder (3) (durch Auflösung nach $\varphi$ bzw. $\beta$ auch ein Korrekturwert herleiten, der abgesehen von Mehrdeutigkeiten im Vorzeichen den Winkelmessfehler $\varphi\_e$ (bei Kugelkoordinaten) und $\beta\_e$ (bei Kegelkoordinaten) im Azimut angibt. Umgekehrt lässt sich unter der Annahme, dass der Azimutwinkel fehlerfrei ist, ein Korrekturwert für den Elevationswinkel herleiten.

**Patentansprüche**

1. Verfahren zur Erkennung von Winkelmessfehlern ($\Delta\varphi$) bei einem winkelauflösenden Radarsensor (10) für Kraftfahrzeuge (28), bei dem für stationäre Radarziele (20) jeweils die Radialgeschwindigkeit (V_r) und mindestens ein Ortungswinkel ($\varphi$, $\alpha$, $\beta$) gemessen wird und anhand des gemessenen Ortungswinkels ein erwarteter Wert für die Radialgeschwindigkeit (V_r) berechnet und mit dem gemessenen Wert verglichen wird, wobei Messungen der Radialgeschwindigkeiten (V_r) und der Ortungswinkel ($\varphi$, $\alpha$, $\beta$) für ein oder mehrere stationäre Ziele (20) vorgenommen werden und für jedes dieser Ziele ein Einzel-Indikatorwert (q_p) berechnet wird, der die Abweichung der gemessenen von der erwarteten Radialgeschwindigkeit angibt, **dadurch gekennzeichnet, dass** die erhaltenen Einzel-Indikatorwerte einer winkelabhängigen Skalierung zum Ausgleich der Winkelabhängigkeit der Empfindlichkeit der Einzel-Indikatorwerte für distortive Winkelfehler unterzogen werden, und aus den skalierten Einzel-Indikatorwerten ein Indikator (I) für das Vorhandensein von Winkelmessfehlern berechnet wird.

2. Verfahren nach Anspruch 1, für ein FMCW-Radar, in dem die Frequenz des Radarsignals in aufeinanderfolgenden Messintervallen rampenförmig moduliert wird, bei welchem Verfahren die Berechnung der Einzel-Indikatorwerte auf der Basis von Messergebnissen erfolgt, die innerhalb desselben Messintervalls erhalten wurden.

3. Verfahren nach Anspruch 2, bei dem die Einzel-Indikatorwerte nach der winkelabhängigen Skalierung zu einem Effektivwert (Q_m) zusammengefasst werden und die in aufeinanderfolgenden Messintervallen erhaltenen Effektivwerte einer zeitlichen Filterung unterzogen werden und der Indikator (I) anhand des Ergebnisses der Filterung berechnet wird.

4. Verfahren nach einem der vorstehenden Ansprüche, bei dem die winkelabhängige Skalierung in einem zweidimensionalen Winkelraum erfolgt.

5. Verfahren nach einem der vorstehenden Ansprüche, bei dem anhand der gemessenen Radialgeschwindigkeiten und Ortungswinkel ein Dejustagefehler des Radarsensors (10) erkannt und korrigiert wird und die Berechnung der Einzel-Indikatorwerte auf der Grundlage der um den Dejustagefehler korrigierten Winkelmessungen erfolgt.

6. Radarsensor für Kraftfahrzeuge, mit einer Sende- und Empfangseinheit und einer Steuer- und Auswerteeinrichtung (18), **dadurch gekennzeichnet, dass** die Auswerteeinrichtung (18) zur Durchführung des Verfahrens nach einem der Vorstehenden Ansprüche ausgebildet ist.

**Claims**

1. Method for detecting angle measurement errors ($\Delta\varphi$) in the case of an angle-resolving radar sensor (10) for motor vehicles (28), in which the radial velocity (V_r) and at least one locating angle ($\varphi$, $\alpha$, ß) are each measured for stationary radar targets (20) and an expected value for the radial velocity (V_r) is calculated on the basis of the measured locating angle and is compared with the measured value, wherein measurements of the radial velocities (V_r) and the locating angles ($\varphi$, $\alpha$, ß) are carried out for one or more stationary targets (20) and an individual indicator value (q_p) indicating the deviation of the measured radial velocity from the expected radial velocity is calculated for each of said targets, **characterized in that** the individual indicator values obtained are subjected to an angle-dependent scaling to compensate for the angle dependence of the sensitivity of the individual indicator values for distortive angle errors, and an indicator (I) for the presence of angle measurement errors is calculated from the scaled individual indicator values.

2. Method according to Claim 1, for an FMCW radar, in which the frequency of the radar signal is modulated in a ramped fashion in successive measurement intervals, in which method the calculation of the individual indicator values is carried out on the basis of measurement results obtained within the same measurement interval.

3. Method according to Claim 2, in which after the angle-dependent scaling, the individual indicator values are combined to form a root-mean-square value ($Q_m$) and the root-mean-square values obtained in successive measurement intervals are subjected to temporal filtering and the indicator (I) is calculated on the basis of the result of the filtering.

4. Method according to any of the preceding claims, in which the angle-dependent scaling takes place in a two-dimensional angle space.

5. Method according to any of the preceding claims, in which a misalignment error of the radar sensor (10) is detected and corrected with the aid of the measured radial velocities and locating angles and the calculation of the individual indicator values is carried out on the basis of the angle measurements corrected by the misalignment error.

6. Radar sensor for motor vehicles, comprising a transmitting and receiving unit and a control and evaluation device (18), **characterized in that** the evaluation device (18) is configured for carrying out the method according to any of the preceding claims.

**Revendications**

1. Procédé de détection d'erreurs de mesures angulaires ($\Delta\varphi$) dans un capteur radar à résolution angulaire (10) pour des véhicules automobiles (28), dans lequel la vitesse radiale (V_r) et au moins un angle de position momentanée ($\varphi, \alpha, \beta$) sont respectivement mesurés pour des cibles fixes du radar (20), et, à l'aide de l'angle de position momentanée mesuré, une valeur attendue pour la vitesse radiale (V_r) est calculée et est comparée à la valeur mesurée, des mesures des vitesses radiales (V_r) et de l'angle de position momentanée ($\varphi, \alpha, \beta$) étant effectuées pour une ou plusieurs de ces cibles fixes (20) et pour chacune de ces cibles, une valeur d'indicateur individuel (q_p) étant calculée, laquelle indique l'écart entre la vitesse radiale mesurée et celle attendue, **caractérisé en ce que** les valeurs d'indicateur individuel obtenues sont soumises à une mise à l'échelle dépendant de l'angle pour compenser la dépendance angulaire de la sensibilité des valeurs d'indicateur individuel aux erreurs angulaires perturbatrices, et un indicateur (I) pour la présence d'erreurs de mesures angulaires est calculé à partir des valeurs d'indicateur individuel mises à l'échelle.

2. Procédé selon la revendication 1, pour un radar FMCW, dans lequel la fréquence du signal radar est modulée en rampe dans des intervalles de mesure successifs, procédé dans lequel le calcul des valeurs d'indicateur individuel s'effectue sur la base de résultats de mesure qui ont été obtenus à l'intérieur du même intervalle de mesure.

3. Procédé selon la revendication 2, dans lequel les valeurs d'indicateur individuel sont regroupées en une valeur efficace (Q_m) après la mise à l'échelle dépendant de l'angle et les valeurs efficaces obtenues dans des intervalles de mesure successifs sont soumises à un filtrage temporel et l'indicateur (I) est calculé à l'aide du résultat du filtrage.

4. Procédé selon l'une quelconque des revendications précédentes, dans lequel la mise à l'échelle dépendant de l'angle s'effectue dans un espace angulaire bidimensionnel.

5. Procédé selon l'une quelconque des revendications précédentes, dans lequel une erreur de désalignement du capteur radar (10) est détectée et corrigée à l'aide des vitesses radiales et des angles de position momentanée mesurés et le calcul des valeurs d'indicateur individuel est effectué sur la base des mesures angulaires corrigées de l'erreur de désalignement.

6. Capteur radar pour véhicules automobiles, comprenant une unité d'émission et de réception et un dispositif de commande et d'évaluation (18), **caractérisé en ce que** le dispositif d'évaluation (18) est conçu pour mettre en œuvre le procédé selon l'une quelconque des revendications précédentes.

**Fig. 1**

**Fig. 2**

Fig. 3

Fig. 4

Fig. 5

Fig. 6

S1 — Auswahl eines Satzes stationärer Ziele P_m

↓

S2 — Schätzung des Fahrzeug-Bewegungszustands

↓

S3 — Validierung der Gültigkeit von P_m

↓

S4 — Aktualisierung des Fahrzeug-Bewegungszustands

↓

S5 — Kompensation der Sensor-Dejustage

↓

S6 — Berechnung der Indikatorwerte q_p

↓

S7 — Winkelabhängige Skalierung der Indikatorwerte

↓

S8 — Berechnung eines Effektivwertes Q_m

↓

S9 — Zeitliche Filterung von Q_m

↓

S10 — Skalierung und Limitierung
$I = \min\{\max[\ F\_scal * Q\_filt;\ Q\_min],\ Q\_max\ \}$

↓

S11 — Ausgabe des Indikatorwertes I

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014223461 A1
- DE 102015116441 A1
- DE 102014283461 A1